# EUROPEAN PATENT APPLICATION

(11) **EP 2 530 763 A1**
(43) Date of publication of application: **05.12.2012**
(21) Application number: 12169745.2
(22) Date of filing: 29.05.2012
(51) Int. Cl.: H01M 2/10, H01M 10/0525

(54) **Secondary battery apparatus and method of manufacturing the same**

(30) Priority: 02.06.2011 JP 2011124417; 02.06.2011 JP 2011124418; 02.06.2011 JP 2011124419; 16.04.2012 JP 2012092753
(71) Applicant: Kabushiki Kaisha Toshiba, Minato-ku, Tokyo 105-8001 (JP)
(72) Inventor: Sekino, Masahiro, Tokyo 105-8001 (JP); Miyamoto, Hidenori, Tokyo 105-8001 (JP); Enomoto, Takashi, Tokyo 105-8001 (JP); Sakate, Yoichi, Tokyo 105-8001 (JP); Hoshino, Mitsuhiro, Tokyo 105-8001 (JP); Ebisawa, Masafumi, Tokyo 105-8001 (JP); Wada, Satoshi, Tokyo 105-8001 (JP); Kasai, Masakatsu, Tokyo 105-8001 (JP)
(74) Representative: Fritsche, Daniel

(57) **Abstract**

A secondary battery apparatus including a housing (10), a plurality of battery cells (12) housed in the housing, and an adhesive agent (100) which adheres to the battery cells. In the secondary battery apparatus, the housing includes an inner surface facing the battery cells, the battery cells each has an outer can whose main component is metal, and the housing includes resin as a main component of its constituent element.

## Description

### CROSS-REFERENCE TO RELATED APPLICATIONS

This application is based upon and claims the benefit of priority from the prior Japanese Patent Application No. 2011-124417, filed on June 2, 2011, the entire contents of which are incorporated herein by reference. Further, this application is based upon and claims the benefit of priority from the prior Japanese Patent Application No. 2011-124418, filed on June 2, 2011, the entire contents of which are incorporated herein by reference. Additionally, this application is based upon and claims the benefit of priority from the prior Japanese Patent Application No. 2011-124419, filed on June 2, 2011, the entire contents of which are incorporated herein by reference. This application is also based upon and claims the benefit of priority from the prior Japanese Patent Application No. 2012-092753, filed on April 16, 2012, the entire contents of which are incorporated herein by reference.

### FIELD

Embodiments described herein generally relate to a secondary battery apparatus and a manufacturing method of a secondary battery apparatus.

### BACKGROUND

In secondary battery apparatuses each having a plurality of secondary battery cells, they have been manufactured respectively by screwing housings themselves which house the battery cells so as to hold the position of each of the battery cells.

In addition, in each of secondary battery apparatuses having a plurality of secondary battery cells, a center case to connect an upper case and a lower case having not less than a definite thickness has been used in a housing which houses the respective battery cells so as to keep stiffness property.

### BRIEF DESCRIPTION OF THE DRAWINGS

Fig. 1 is a perspective view showing a secondary battery apparatus according to a first embodiment;
Fig. 2 is an exploded perspective view of the secondary battery apparatus according to the first embodiment;
Fig. 3 is a sectional view in the longitudinal direction of the secondary battery apparatus according to the first embodiment;
Fig. 4 is a diagram showing an example of temperature characteristics of shear modulus of rigidity and an example of temperature characteristics of logarithmic rate of decay of the adhesive agent according to the first embodiment;
Fig. 5 is a diagram showing an example of a DSC thermograph of the adhesive agent according to the first embodiment;
Fig. 6 is a perspective view showing a secondary battery apparatus according to a second embodiment;
Fig. 7 is an exploded perspective view of the secondary battery apparatus according to the second embodiment;
Fig. 8 is a sectional view in the longitudinal direction of the secondary battery apparatus according to the second embodiment;
Fig. 9 is a perspective view showing a modification of the secondary battery apparatus according to the second embodiment;
Fig. 10 is an exploded perspective view of the modification of the secondary battery apparatus according to the second embodiment;
Fig. 11 is a sectional view in the longitudinal direction of the modification of the secondary battery apparatus according to the second embodiment;
Fig. 12 is a sectional view in the longitudinal direction of a modification of the secondary battery apparatus according to the second embodiment;
Fig. 13 is a perspective view showing a modification of the secondary battery apparatus according to the second embodiment;
Fig. 14 is a perspective view showing a secondary battery apparatus according to a third embodiment;
Fig. 15 is an exploded perspective view of the secondary battery apparatus according to the third embodiment;
Fig. 16 is a perspective view of the battery cell according to the third embodiment;
Fig. 17 is a sectional view in the longitudinal direction of the secondary battery apparatus according to the third embodiment;
Fig. 18 is a sectional view in the longitudinal direction of a modification of the secondary battery apparatus according to the third embodiment;
Fig. 19 is a sectional view in the longitudinal direction of a modification of the secondary battery apparatus according to the third embodiment;
Fig. 20 is a perspective view of a battery cell according to a fourth embodiment;
Fig. 21 is a perspective view of a battery cell according to the fourth embodiment; and
Fig. 22 is a perspective view of a battery cell according to the fourth embodiment.

### DETAILED DESCTIPTION

In view of the above circumstances, an aspect of embodiments provides a secondary battery apparatus including a housing, a plurality of battery cells housed in the housing, and adhesive agent which adheres to the battery cells, wherein the housing includes an inner surface facing the battery cells and engagement grooves formed on the inner surface to house the respective battery cells, the battery cells each has an outer can whose main component is metal, and the housing includes resin as a main component of its constituent element.

According to the aspect of embodiments, the battery cells can be housed in the housing, even in case that the individual differences among sizes of the respective battery cells are large.

Hereinafter, the present embodiments will be described with reference to the drawings.

### (First Embodiment)

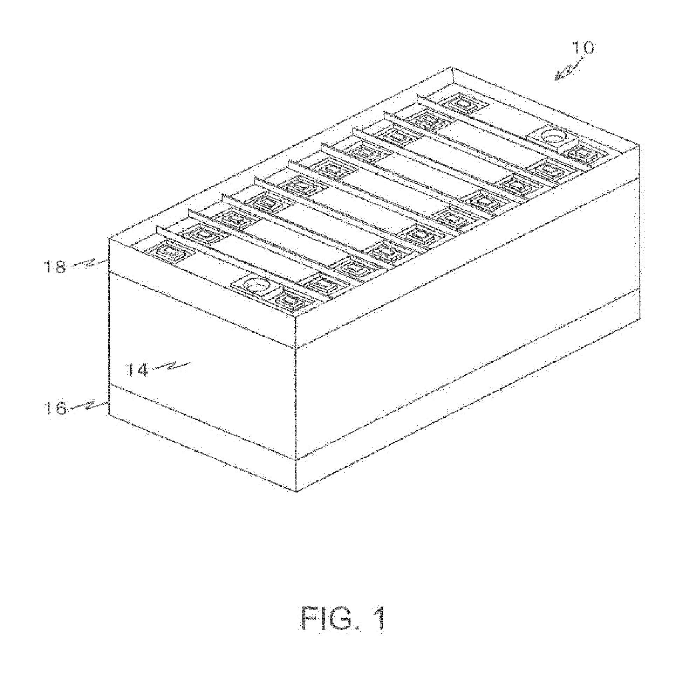

The present embodiment will be described using Fig. 1 to Fig. 5.

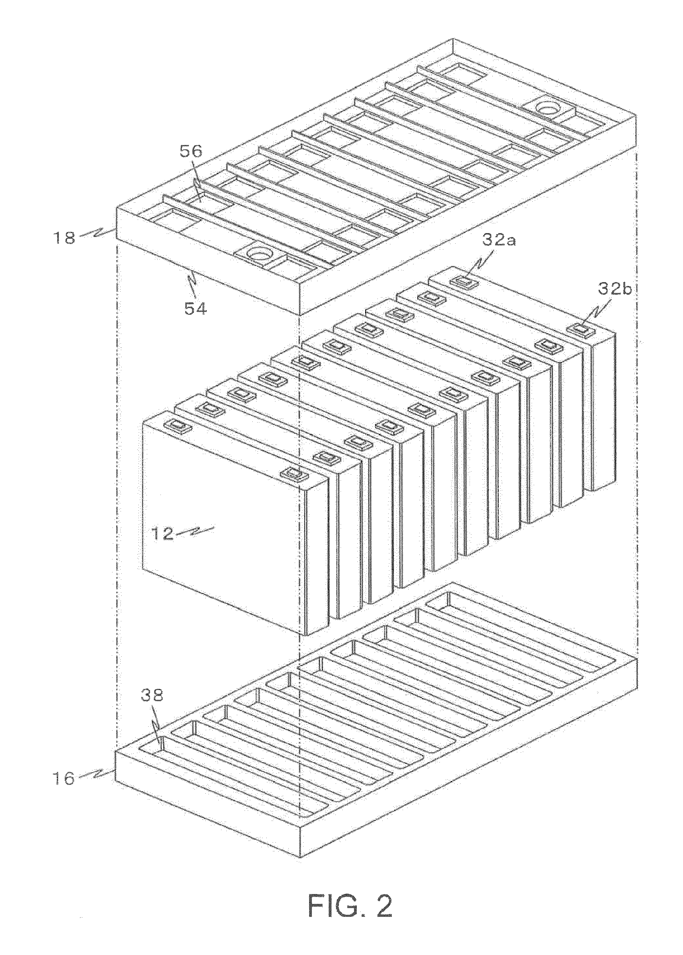

Fig. 1 is a perspective view showing an appearance of a secondary battery apparatus according to the embodiment, and Fig. 2 is an exploded perspective view of the secondary battery apparatus in the state that a case and battery cells are exploded.

As shown in FIG. 1, Fig. 2, a secondary battery apparatus is provided with a case (housing) 10 with an approximately rectangular box shape, and a plurality of, ten, for example, battery cells (secondary batteries) 12 housed in the case, and is thereby composed as an assembled battery.

The case 10 have three divided members. They are a rectangular frame shaped center case 14 whose top and bottom portions are opened, a lower case 16 which is formed of a rectangular plate shape and composes a bottom wall, and an upper case 18 which is formed of a rectangular plate shape and composes a ceiling wall. And the lower case 16, the center case 14, and the upper case 18 are joined in this order to thereby compose the rectangular box shaped case 10. The constituent components of the case 10 are respectively formed with synthetic resins each having insulation property such as polyphenylene ether (PPE).

Each of the battery cells 12 is a nonaqueous electrolyte secondary battery such as a lithium-ion battery, and is provided with a flat external container with an approximately rectangular solid shape which is formed with aluminium or aluminium alloy, for example, and an electrode body housed in the external container along with nonaqueous electrolyte solution. The external container has a container main body whose upper end is opened, and a rectangular plate shaped lid body which is welded on the container main body so as to block an opening of the container main body, and is formed in the liquid-tight manner. The electrode body is formed of a flat and rectangular shape by such a method that a positive electrode plate, a negative electrode plate, and a separator positioned therebetween are spirally wound and are then compressed in the diameter direction.

The circumference of the container main body is wound with an insulating film except at the upper end portion and the lower end portion of the container. This film regulates expansion of the external container, and prevents the short circuiting of the external container with another battery cell 12 or the short circuiting of the external container with another member.

As shown in Fig. 2, engagement grooves 38 of the number, that is 10 here, corresponding to the number of the battery cells 12 are formed on the inner surface of the lower case 16. Each of the engagement grooves 38 is formed of an elongated rectangular shape corresponding to the cross-sectional shape of the external container of the battery cell 12, and extends along the width direction of the lower case 16. A plurality of the engagement grooves 38 are provided in a line at prescribed intervals in the longitudinal direction of the lower case 16.

The center case 14 is formed of a rectangular frame shape, and has a pair of side walls which extend in the longitudinal direction and face to each other, and another pair of side walls which extend in the width direction and face to each other.

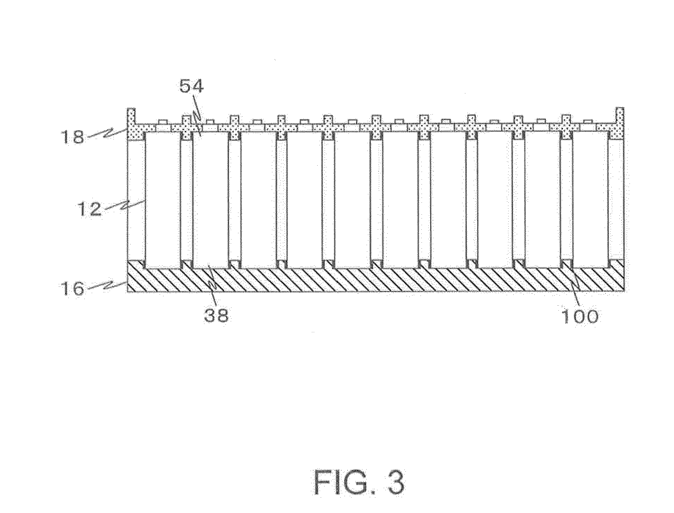

As shown in Fig. 2, Fig. 3, engagement grooves 54 of the number corresponding to the number, that is 10 here, of the battery cells 12 are formed at the inner surface side of the upper case 18. Each of the engagement grooves 54 is formed of an elongated rectangular shape corresponding to the cross-sectional shape of the external container of the battery cell 12, and extends along the width direction of the lower case 18. A plurality of the engagement grooves 54 are provided in two lines at prescribed intervals in the longitudinal direction of the lower case 18.

In the upper case 18, at the bottom of each of the engagement grooves 54, rectangular penetrating openings 56a, 56b respectively corresponding to a positive electrode terminal 32a and a negative electrode terminal 32b of the battery cell 12 are formed, and in addition, an exhaust hole 57 facing a safety valve of the battery cell 12 is formed.

The lower case 16 constructed as described above is screwed shut at the lower surface side of the center case 14 and is fixed to the center case 14 to thereby form the bottom wall of the case 10. The upper case 18 is screwed shut at the upper surface side of the center case 14 and is fixed to the center case 14 to thereby form the ceiling wall of the case 10. The center case 14 is joined between the lower case 16 and the upper case 18 which face to each other at a gap.

As shown in Fig. 3, each of the battery cells 12 is housed in a housing chamber of the case 10 for each cell unit C The lower end portion of each of the battery cells 12 is fitted in the engagement groove 38 of the lower case 16, and is fixed to the lower case 16 with adhesive agent 100.

The upper end portion of each of the battery cells 12, that is, an end portion where the electrode terminals are provided, is fitted in the engagement groove 54 of the upper case 18, and is fixed to the upper case 18 with the adhesive agent 100.

When the battery cells 12 are fitted in the engagement grooves 38, 54 like this, and thereby positions between the battery cells are determined, the adjacent battery cells are arranged in the state that main surfaces of the external containers 30, i.e. the wide surfaces of the external containers, face to each other in parallel at a prescribed gap. The adjacent cell units C are also arranged to face to each other in parallel at a prescribed gap. A plurality of the battery cells which are arranged in parallel at gaps like this are arranged in parallel to form a row.

The positive electrode terminal 32a and the negative electrode terminal 32b of the battery cell 12 are penetrated through the penetrating openings 56a, 56b, and protrude outside the upper surface of the upper case 18, respectively. And the cell units of each row are connected by a bus bar (not shown) to thereby form an assembled battery.

In the present embodiment, the bus bar serving as a fitting is formed by fold forming a metal plate made of conductive material, such as aluminium.

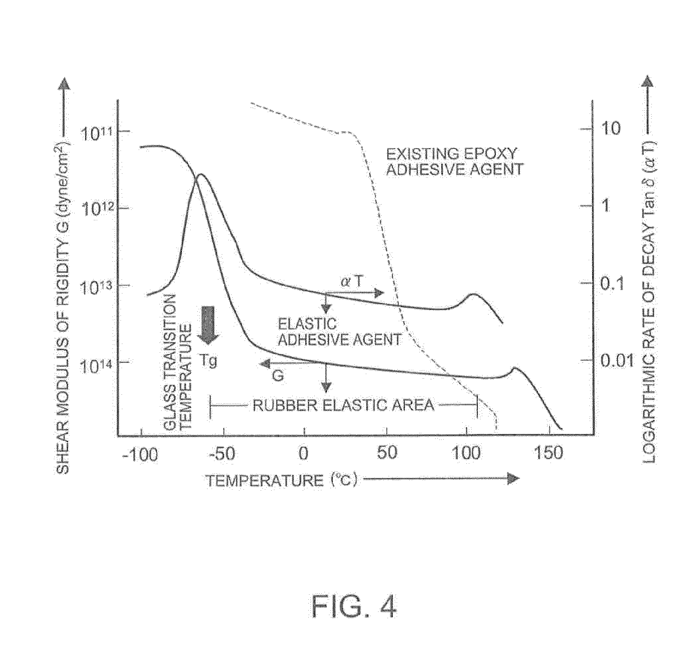

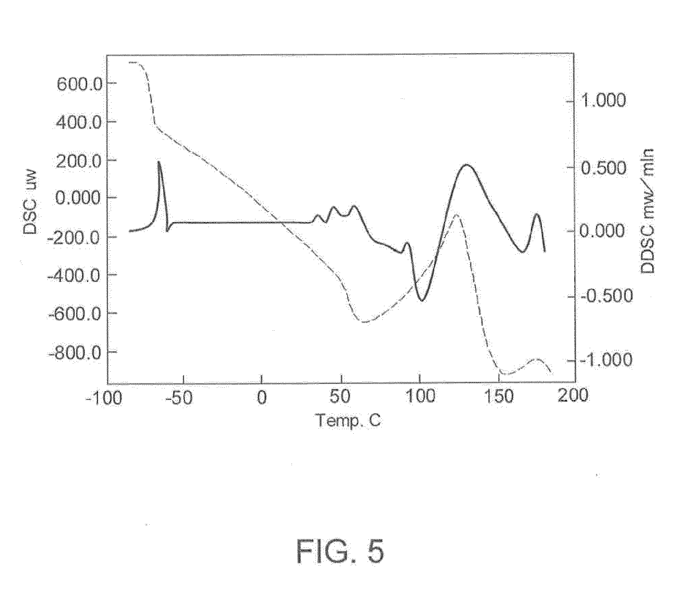

The battery cells are fixed to the housing using the adhesive agent 100, in which a glass transition point does not exist at the temperature range from -40 to 80 °C and whose tensile shear strength is a strength of not less than 1 N/mm², as shown in Fig. 4. That is, a peak does not exist in Temp - Td. Or, as shown in Fig. 5, a DDSC peak does not exist in the DSC (Differential Scanning Calorimetry) thermograph of the adhesive agent 100.

In addition, as the adhesive agent, adhesive agents which are curable using organic polymer having hydrolyzable silicon-containing group (hydrolyzable silyl group, as a representative example), acrylic resin adhesives, and polyurethane resin adhesives are excellent in weatherability and preferable.

Among them, adhesive agents which are curable using organic polymer having hydrolyzable silicon-containing group maintain a stable rubber elastic state at a normal use temperature range and are excellent in absorbability of the vibration and shock applied from outside, and thereby are more preferable.

In addition, at the time of adhesion of the battery cell and the external member, since adhesive agents which are curable using organic polymer having hydrolyzable silicon-containing group can absorb deformation due to linear expansion coefficient difference as well as deformation due to thermal cycle with stable rubber elasticity thereof, it is possible to provide a secondary battery apparatus which is excellent in durability of environmental variation such as vibration, shock and thermal cycle.

In addition, adhesive agents obtained by mixing adhesive agents which are curable using organic polymer having hydrolyzable silicon-containing group and epoxy adhesives can increase adhesive strengths while maintaining rubber elasticity and weatherability, and therefore are more preferable.

Besides, if the adhesion of the adhesive agent to the battery and metal housing is taken into consideration, adhesive agents containing silane coupling agent have larger adhesive strength, and are therefore preferable. Besides, adhesive agents containing organic metal compound such as carboxylic acid metal salt, organic tin compound, organic aluminium compound, organic zirconium compound as the adhesive agent before curing, have larger adhesive strength, and are therefore preferable.

### (Second Embodiment)

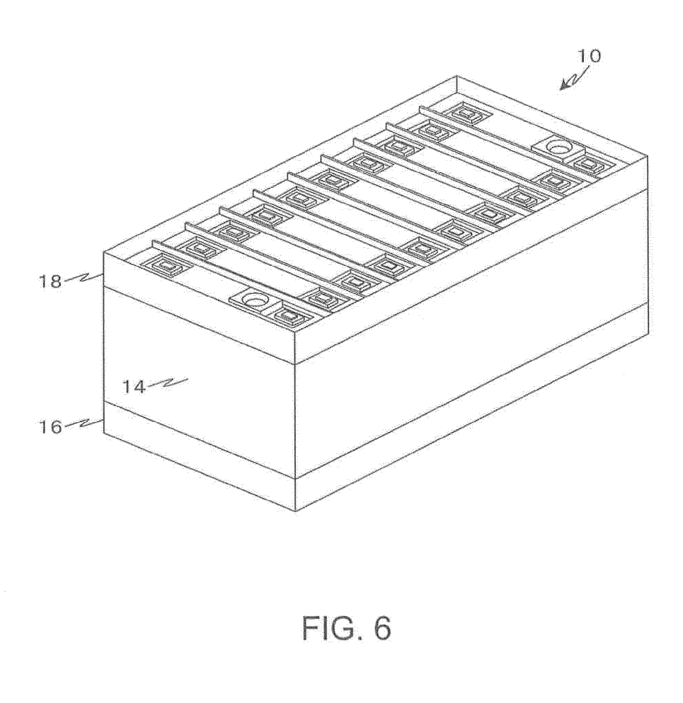

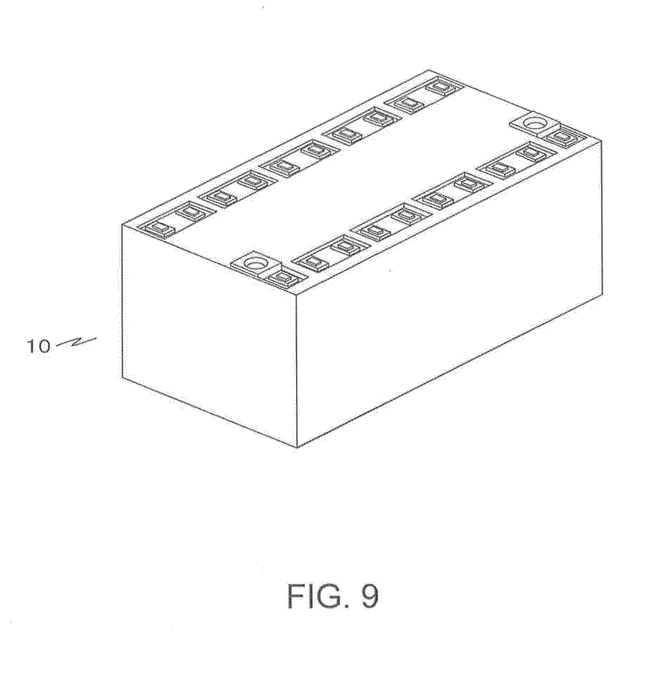

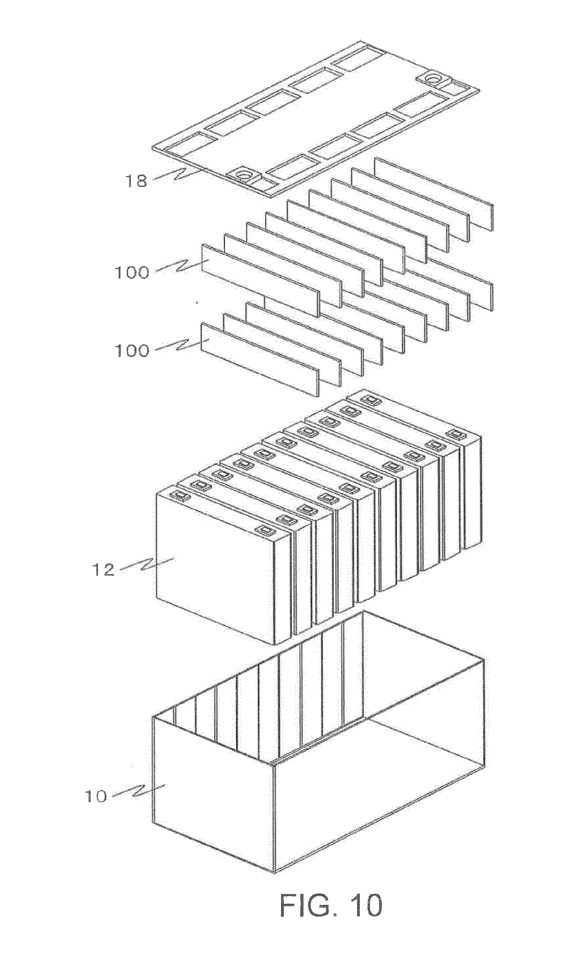

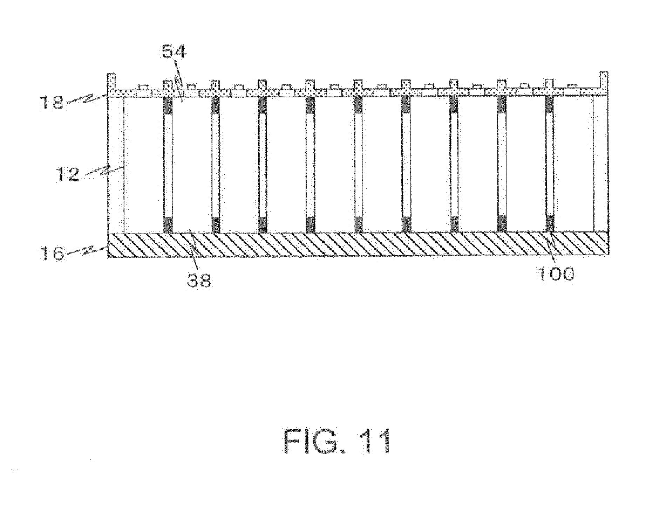

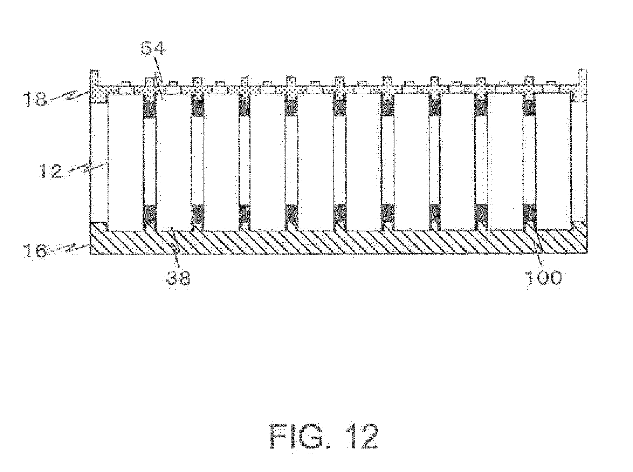

The present embodiment will be described using Fig. 6 to Fig. 12.

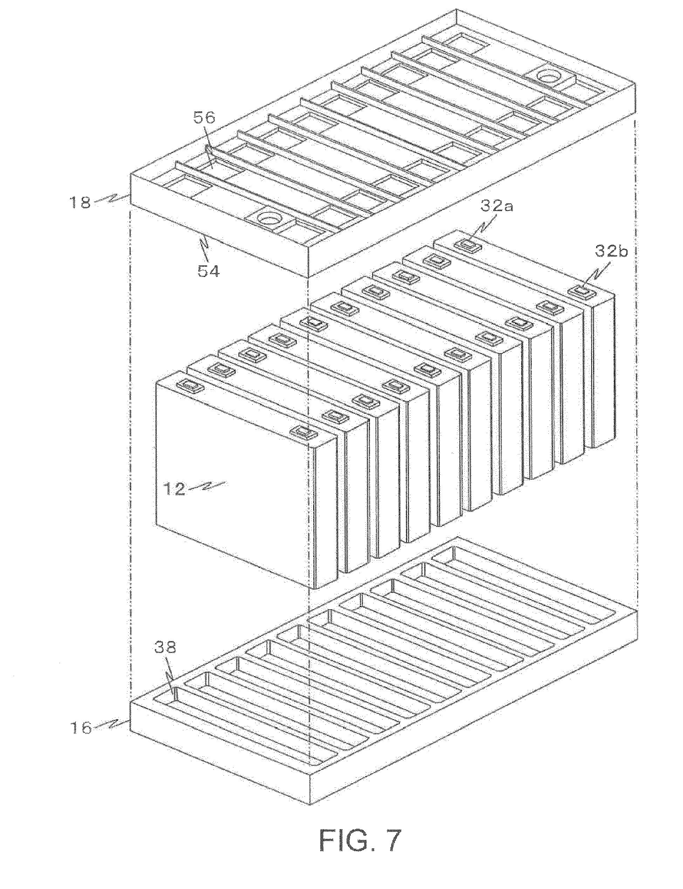

Fig. 6 is a perspective view showing an appearance of a secondary battery apparatus according to the embodiment, and Fig. 7 is an exploded perspective view of the secondary battery apparatus in the state that a case and battery cells are exploded.

As shown in FIG. 6, Fig. 7, a secondary battery apparatus is provided with the case (housing) 10 with an approximately rectangular box shape, and a plurality of, ten, for example, the battery cells (secondary batteries) 12 housed in the case, and is thereby composed as an assembled battery.

The case 10 have three divided members. They are the rectangular frame shaped center case 14 whose top and bottom portions are opened, the lower case 16 which is formed of a rectangular plate shape and composes a bottom wall, and the upper case 18 which is formed of a rectangular plate shape and composes a ceiling wall. And the lower case 16, the center case 14, and the upper case 18 are joined in this order to thereby compose the rectangular box shaped case 10. The constituent components of the case 10 are respectively formed with synthetic resins each having insulation property such as polyphenylene ether (PPE).

Each of the battery cells 12 is a nonaqueous electrolyte secondary battery such as a lithium-ion battery, and is provided with a flat external container with an approximately rectangular solid shape which is formed with aluminium or aluminium alloy, for example, and an electrode body housed in the external container along with nonaqueous electrolyte solution. The external container has a container main body whose upper end is opened, and a rectangular plate shaped lid body which is welded on the container main body so as to block an opening of the container main body, and is formed in the liquid-tight manner. The electrode body is formed of a flat and rectangular shape by such a method that a positive electrode plate, a negative electrode plate, and a separator positioned therebetween are spirally wound and are then compressed in the diameter direction.

The circumference of the container main body is wound with an insulating film except at the upper end portion and the lower end portion of the container. This film regulates expansion of the external container, and prevents the short circuiting of the external container with another battery cell 12 or the short circuiting of the external container with another member.

As shown in Fig. 6, the engagement grooves 38 of the number, that is 10 here, corresponding to the number of the battery cells 12 are formed on the inner surface of the lower case 16. Each of the engagement grooves 38 is formed of an elongated rectangular shape corresponding to the cross-sectional shape of the external container of the battery cell 12, and extends along the width direction of the lower case 16. A plurality of the engagement grooves 38 are provided in a line at prescribed intervals in the longitudinal direction of the lower case 16.

The center case 14 is formed of a rectangular frame shape, and has a pair of side walls which extend in the longitudinal direction and face to each other, and another pair of side walls which extend in the width direction and face to each other.

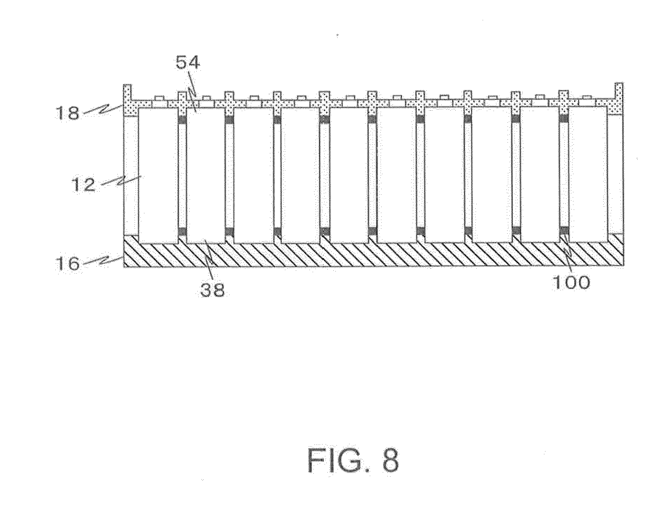

As shown in Fig. 7, Fig. 8, the engagement grooves 54 of the number corresponding to the number, that is 10 here, of the battery cells 12 are formed at the inner surface side of the upper case 18. Each of the engagement grooves 54 is formed of an elongated rectangular shape corresponding to the cross-sectional shape of the external container of the battery cell 12, and extends along the width direction of the lower case 18. A plurality of the engagement grooves 54 are provided in two lines at prescribed intervals in the longitudinal direction of the lower case 18.

In the upper case 18, at the bottom of each of the engagement grooves 54, the rectangular penetrating openings 56a, 56b respectively corresponding to the positive electrode terminal 32a and the negative electrode terminal 32b of the battery cell 12 are formed, and in addition, the exhaust hole 57 facing a safety valve of the battery cell 12 is formed.

The lower case 16 constructed as described above is screwed shut at the lower surface side of the center case 14 and is fixed to the center case 14 to thereby form the bottom wall of the case 10. The upper case 18 is screwed shut at the upper surface side of the center case 14 and is fixed to the center case 14 to thereby form the ceiling wall of the case 10. The center case 14 is joined between the lower case 16 and the upper case 18 which face to each other at a gap.

As shown in Fig. 8, each of the battery cells 12 is housed in a housing chamber of the case 10 for each cell unit C. The lower end portion of each of the battery cells 12 is fitted in the engagement groove 38 of the lower case 16, and is fixed to the lower case 16 with adhesive agent 100. The upper end portion of each of the battery cells 12, that is, an end portion where the electrode terminals are provided, is fitted in the engagement groove 54 of the upper case 18, and is fixed to the upper case 18 with the adhesive agent 100.

When the battery cells 12 are fitted in the engagement grooves 38, 54 like this, and thereby positions between the battery cells are determined, the adjacent battery cells are arranged in the state that main surfaces of the external containers 30, i.e. the wide surfaces of the external containers, face to each other in parallel at a prescribed gap. The adjacent cell units C are also arranged to face to each other in parallel at a prescribed gap. A plurality of the battery cells which are arranged in parallel at gaps like this are arranged in parallel to form a row.

The positive electrode terminal 32a and the negative electrode terminal 32b of the battery cell 12 are penetrated through the penetrating openings 56a, 56b, and protrude outside the upper surface of the upper case 18, respectively. And the cell units of each row are connected by a bus bar (not shown) to thereby form an assembled battery.

In the present embodiment, the bus bar serving as a fitting is formed by fold forming a metal plate made of conductive material, such as aluminium.

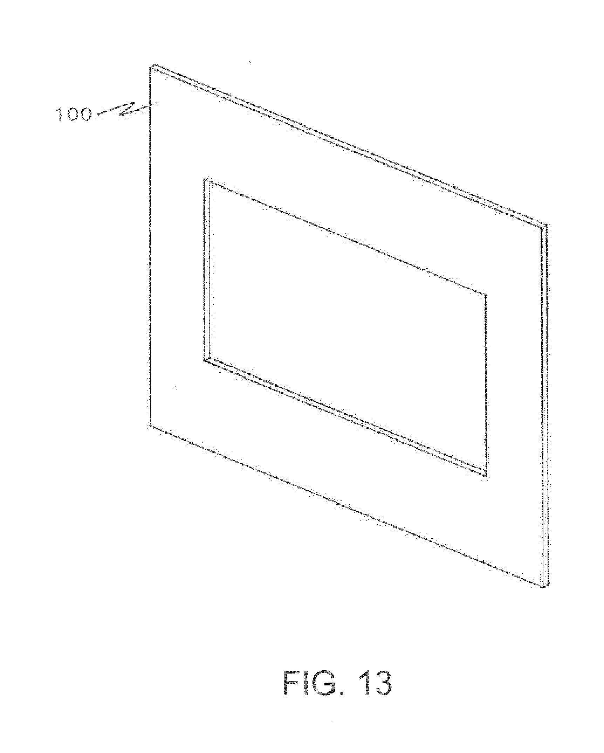

The adhesive agent 100 is used by being applied to each of the battery cells separately at not less than two places. In case that the battery cells 12 are installed in the housing 10 as shown in Fig. 8, Fig. 10, Fig. 11, Fig. 12, for example, the adhesive agent 100 is applied to each of the battery cells 12 at the upper case side and the lower case side separately. Besides, as shown in Fig. 13, the adhesive agent 100 may be applied to the battery cell 12 (applied to at not less than three places) so as to exclude the intersection point of diagonal lines of the battery cell 12. By this means, the adhesive agent is used at the portions of the battery cell except deformable portions thereof to thereby increase the strength of the assembled battery.

In addition, in case that the sizes of the battery cells are different, it becomes possible to align the heights of the upper surfaces to which the terminals of the battery cells are fitted.

In addition, the adhesive agent is applied to the upper portion and the lower portion of the rectangular secondary battery to thereby keep the distance between the terminals and reduce the load applied to the bus bar, and in addition it becomes possible to allow the deformation due to expansion.

In addition, since the adhesive agent has a larger coefficient of thermal conductivity compared with that of air, the battery cells are structurally joined with the adhesive agent to thereby induce the heat transfer between the battery cells, and the effect that the temperatures in the housing are made uniform can be obtained.

In addition, not only when the batteries are bonded with the adhesive agent but also in case that the adhesive agent comes unstuck, the adhesive agent plays a role as buffer, and thereby the probability of destruction due to the collision between the battery cells themselves can be reduced.

### (Third Embodiment)

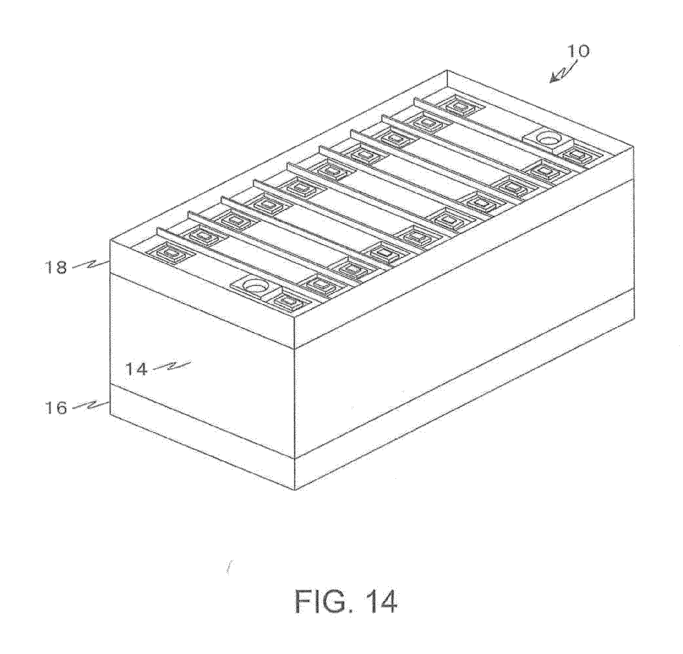

The present embodiment will be described using Fig. 14 to Fig. 19.

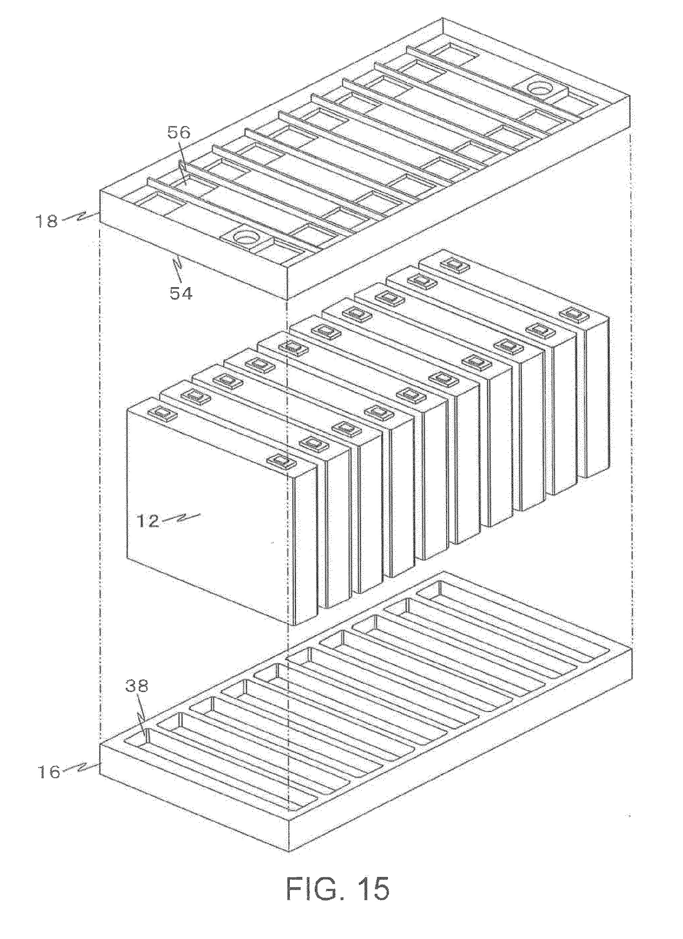

Fig. 14 is a perspective view showing an appearance of a secondary battery apparatus according to the embodiment, and Fig. 15 is an exploded perspective view of the secondary battery apparatus in the state that a case and battery cells are exploded.

As shown in FIG. 14, Fig. 15, a secondary battery apparatus is provided with the case (housing) 10 with an approximately rectangular box shape, and a plurality of, ten, for example, the battery cells (secondary batteries) 12 housed in the case, and is thereby composed as an assembled battery.

The case 10 have three divided members. They are the rectangular frame shaped center case 14 whose top and bottom portions are opened, the lower case 16 which is formed of a rectangular plate shape and composes a bottom wall, and the upper case 18 which is formed of a rectangular plate shape and composes a ceiling wall. And the lower case 16, the center case 14, and the upper case 18 are joined in this order to thereby compose the rectangular box shaped case 10. The constituent components of the case 10 are respectively formed with synthetic resins each having insulation property such as polyphenylene ether (PPE).

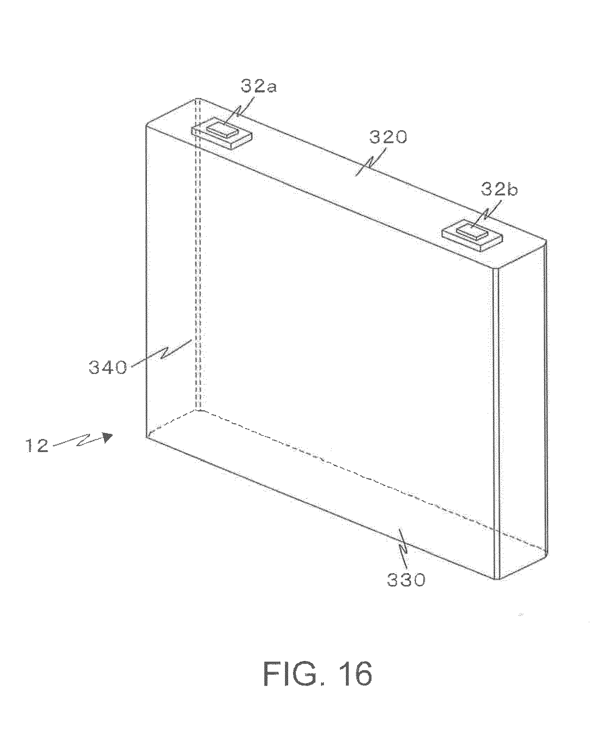

Each of the battery cells 12 is a nonaqueous electrolyte secondary battery such as a lithium-ion battery, and is provided with a flat external container with an approximately rectangular solid shape which is formed with aluminium or aluminium alloy, for example, and an electrode body housed in the external container along with nonaqueous electrolyte solution. The external container has a container main body whose upper end is opened, and a rectangular plate shaped lid body which is welded on the container main body so as to block an opening of the container main body, and is formed in the liquid-tight manner. The electrode body is formed of a flat and rectangular shape by such a method that a positive electrode plate, a negative electrode plate, and a separator positioned therebetween are spirally wound and are then compressed in the diameter direction. In Fig. 16, a terminal surface 320 is a surface which contacts with the upper case 18 directly or via the adhesive agent 100 at the time of assembly as shown in Fig. 15. A lower end surface 330 is a surface which faces the terminal surface 320 approximately in parallel and contacts with the lower case 16 directly or via the adhesive agent 100. Circumference surfaces 340 are a so-called outer can of the battery and are four surfaces of the battery except the terminal surface and the lower end surface.

The circumference of the container main body is wound with an insulating film except at the upper end portion and the lower end portion of the container. This film regulates expansion of the external container, and prevents the short circuiting of the external container with another battery cell 12 or the short circuiting of the external container with another member.

As shown in Fig. 15, the engagement grooves 38 of the number, that is 10 here, corresponding to the number of the battery cells 12 are formed on the inner surface of the lower case 16. Each of the engagement grooves 38 is formed of an elongated rectangular shape corresponding to the cross-sectional shape of the external container of the battery cell 12, and extends along the width direction of the lower case 16. A plurality of the engagement grooves 38 are provided in a line at prescribed intervals in the longitudinal direction of the lower case 16.

The center case 14 is formed of a rectangular frame shape, and has a pair of side walls which extend in the longitudinal direction and face to each other, and another pair of side walls which extend in the width direction and face to each other.

As shown in Fig. 15, the engagement grooves 54 of the number corresponding to the number, that is 10 here, of the battery cells 12 are formed at the inner surface side of the upper case 18. Each of the engagement grooves 54 is formed of an elongated rectangular shape corresponding to the cross-sectional shape of the external container of the battery cell 12, and extends along the width direction of the lower case 18. A plurality of the engagement grooves 54 are provided in two lines at prescribed intervals in the longitudinal direction of the lower case 18.

In the upper case 18, at the bottom of each of the engagement grooves 54, the rectangular penetrating openings 56a, 56b respectively corresponding to the positive electrode terminal 32a and the negative electrode terminal 32b of the battery cell 12 are formed, and in addition, the exhaust hole 57 facing a safety valve of the battery cell 12 is formed.

The lower case 16 constructed as described above is screwed shut at the lower surface side of the center case 14 and is fixed to the center case 14 to thereby form the bottom wall of the case 10. The upper case 18 is screwed shut at the upper surface side of the center case 14 and is fixed to the center case 14 to thereby form the ceiling wall of the case 10. The center case 14 is joined between the lower case 16 and the upper case 18 which face to each other at a gap.

As shown in Fig. 15, each of the battery cells 12 is housed in a housing chamber of the case 10 for each cell unit C. The lower end portion of each of the battery cells 12 is fitted in the engagement groove 38 of the lower case 16, and is fixed to the lower case 16 with adhesive agent 100. The upper end portion of each of the battery cells 12, that is, an end portion where the electrode terminals are provided, is fitted in the engagement groove 54 of the upper case 18, and is fixed to the upper case 18 with the adhesive agent 100.

When the battery cells 12 are fitted in the engagement grooves 38, 54 like this, and thereby positions between the battery cells are determined, the adjacent battery cells are arranged in the state that main surfaces of the external containers 30, i.e. the wide surfaces of the external containers, face to each other in parallel at a prescribed gap. The adjacent cell units C are also arranged to face to each other in parallel at a prescribed gap. A plurality of the battery cells which are arranged in parallel at gaps like this are arranged in parallel to form a row.

The positive electrode terminal 32a and the negative electrode terminal 32b of the battery cell 12 are penetrated through the penetrating openings 56a, 56b, and protrude outside the upper surface of the upper case 18, respectively. And the cell units of each row are connected by a bus bar (not shown) to thereby form an assembled battery.

In the present embodiment, the bus bar serving as a fitting is formed by fold forming a metal plate made of conductive material, such as aluminium.

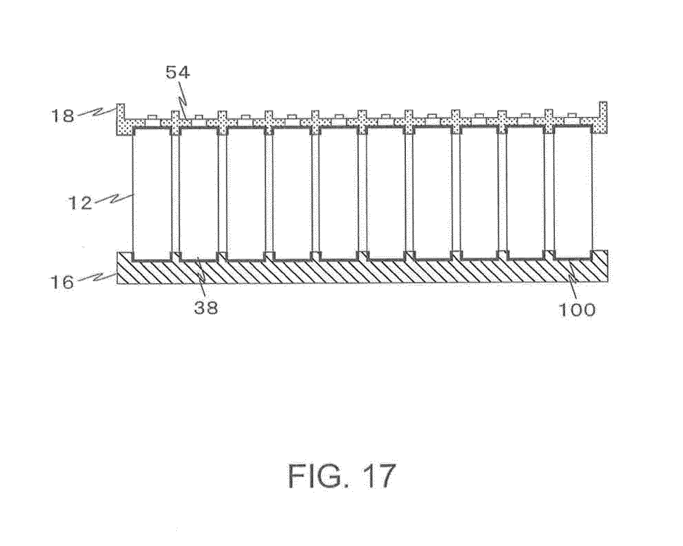

The adhesive agent 100 is used by being applied to each of the battery cells separately at not less than two places of a connecting place with the upper case and a connecting place with the lower case. This state is shown in any of Fig. 17, Fig. 18, Fig. 19, for example. The battery cells can be used as braces of the secondary battery apparatus like this, and since the force applied to the battery module (secondary battery apparatus) is applied to the case - the adhesive agent - the battery cells, it is possible to maintain the strength of the whole battery module. By this means, even if the thickness of the center case 14 is made thin, it becomes possible to ensure the necessary strength of the whole battery module.

As shown in Fig. 17, the battery cell 12 is bonded to the upper case via the adhesive agent applied to the terminal surface and the circumference surfaces thereof and is bonded to the lower case via the adhesive agent applied to the lower end surface and the circumference surfaces thereof, for example.

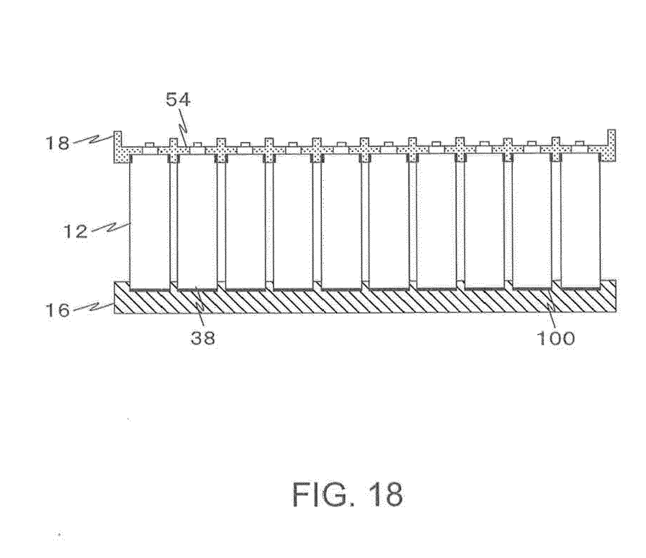

Besides, as shown in Fig. 18, the battery cell 12 is bonded to the upper case via the adhesive agent applied to the circumference surfaces thereof and is bonded to the lower case via the adhesive agent applied to the lower end surface and the circumference surfaces thereof, for example. The adhesive agent is not applied to the terminal surface like this. It is possible to flexibly respond to the differences in the heights of the terminal surfaces and the lower end surfaces of the battery cells 12.

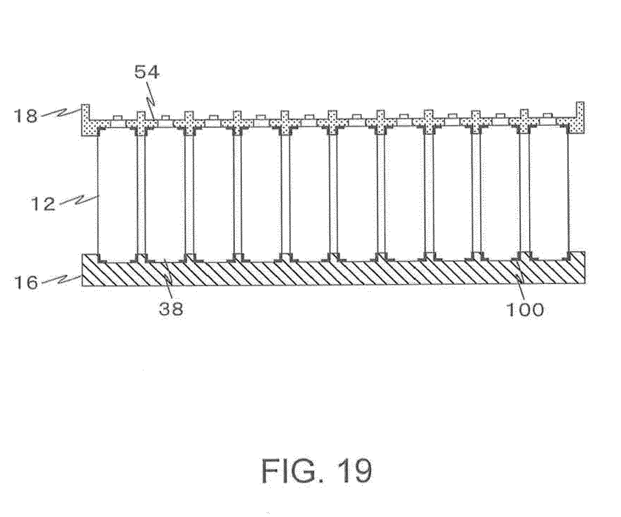

Besides, as shown in Fig. 19, the battery cell 12 is bonded to the upper case via the adhesive agent applied partly to the circumference surface side of the terminal surface and the adhesive agent applied to the circumference surfaces and is bonded to the lower case via the adhesive agent applied partly to the circumference surface side of the lower end surface and the adhesive agent applied to the circumference surfaces. The corner portions of the battery cells are fixed like this, it is possible to flexibly respond to the deformation of the battery cells while maintaining the strength.

In addition, the adhesive agent is applied to the upper portion and the lower portion of the rectangular secondary battery to thereby keep the distance between the terminals and reduce the load applied to the bus bar, and in addition it becomes possible to allow the deformation due to expansion.

In addition, since the adhesive agent has a larger coefficient of thermal conductivity compared with that of air, the battery cells are structurally joined with the adhesive agent to thereby induce the heat transfer between the battery cells, and the effect that the temperatures in the housing are made uniform can be obtained.

In addition, not only when the batteries are bonded with the adhesive agent but also in case that the adhesive agent comes unstuck, the adhesive agent plays a role as buffer, and thereby the probability of destruction due to the collision between the battery cells themselves can be reduced.

Since a plurality of case members (the upper case and the lower case and so on) are separately fixed to the battery cells with the adhesive agent like this, the battery cells themselves can be used as braces of the module structure, respectively, and since the force applied to the module is transmitted to the case, the adhesive agent, the battery cells, it is possible to disperse the force applied to the whole module. By this means, even if the thickness of the center case 14 is made thin, it becomes possible to ensure the necessary strength of the whole module and thereby it becomes possible to maintain the structural strength for the long term. In addition, it is possible to structure the module with smaller members so as to obtain the same strength as in the conventional module.

### (Fourth Embodiment)

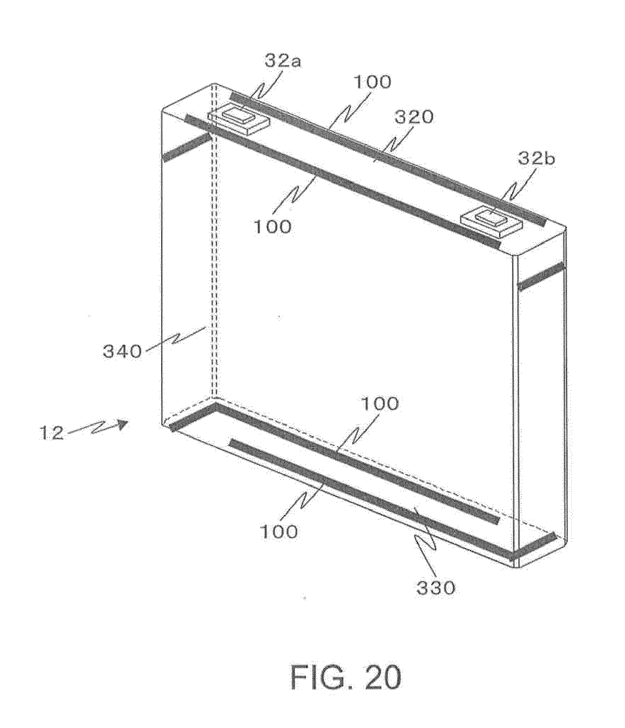

The present embodiment will be described using Fig. 20 to Fig. 22.

Fig. 20, Fig. 21, Fig. 22 are each a perspective view of a battery cell according to a fourth embodiment.
In the present embodiment, the positions to which the adhesive agent 100 is to be applied in order to fix the battery cell 12 are specified. In addition, in the present embodiment, the description is made such that the adhesive agent 100 is applied to the battery cell 12, but the adhesive agent 100 may be applied to the center case 14, the lower case 16, the upper case 18 so that the adhesive agent 100 is applied to the battery cell 12 at the positions as described in any of Fig. 20 to Fig. 22. In addition, the adhesive agent 100 may be applied to both any one of the cases and the battery cell 12.

In Fig. 20 of the present embodiment, the adhesive agent 100 is applied to both the terminal surface 320 having the positive electrode terminal 32a and the negative electrode terminal 32b and the lower end surface 330, so as to form two lines thereof along the longitudinal direction, respectively. The adhesive agent 100 is further applied to the lower end surface 330 so as to form two lines thereof along the width direction.

The sum of the lines in the longitudinal direction and the lines in the width direction of the adhesive agent applied to the lower end surface 330 is longer than the lines of the adhesive agent applied to the terminal surface 320. Or, the amount of the adhesive agent applied to the lower end surface 330 is more than the amount of the adhesive agent applied to the terminal surface 320.

In Fig. 20 of the present embodiment, the adhesive agent 100 is applied to both the terminal surface 320 having the positive electrode terminal 32a and the negative electrode terminal 32b and the lower end surface 330, so as to form two lines thereof along the longitudinal direction, respectively. The adhesive agent 100 is further applied to the lower end surface 330 so as to form two lines thereof along the width direction.

In order to obtain sufficient adhesive forces respectively between the cell 12 and the upper case 18 and between the cell 12 and the lower case 16 using the adhesive agent 100, it is necessary to apply the adhesive agent 100 to the terminal surface 320 and the lower end surface 330 by not less than a definite area, no matter what shape the adhesive agent 100 may be.

As shown in Fig. 20, the adhesive agent 100 is applied to each of the terminal surface 320 and the lower end surface 330, at two positions which are symmetrical about the center point thereof and also at the outer circumference portions of the cell where the distance from the center point is large. By this means, it is possible to obtain more effective holding force against the force applied to the battery cell 12 in the whole direction of the tandem direction and rotation direction, and thereby it is possible to hold the battery cell with a smaller adhesion area.

In addition, with respect to the adhesive agent on the terminal surface 320, the applying positions which include the center portions not in the width direction but in the longitudinal direction of the cell are determined, in order to suppress the displacement of the positive electrode terminal 32a, the negative electrode terminal 32b at the time of deformation (expansion and so on with age) of the battery cell 12. By this means, in case that the battery cell has expanded, the displacement of the terminals is reduced, and the concentration of stress applied to the terminal connecting portions can be reduced. Thereby, it is possible to provide a battery module where the resistance to impact and resistance to vibration are less reduced even in case that the battery cell has expanded.

In addition, the adhesive agent 100 may be applied to the circumference surfaces.

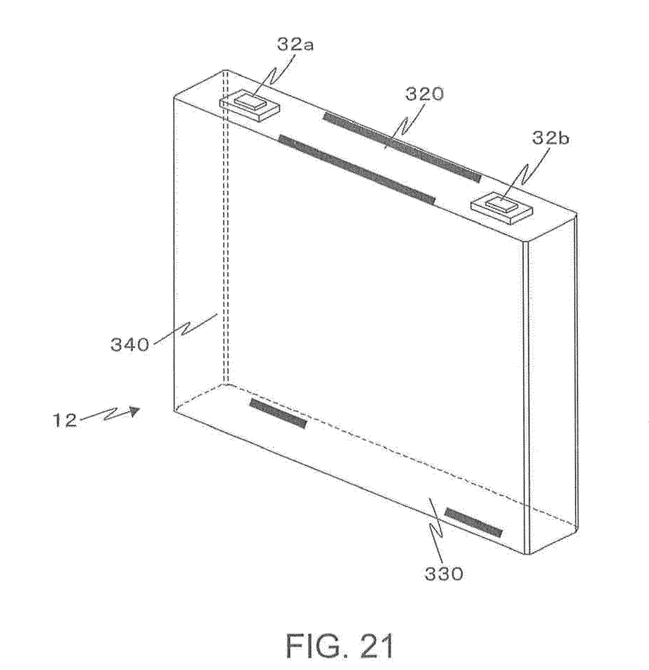

Besides, as the embodiment to obtain the same effect, as shown in Fig. 21, the adhesive agent 100 is applied to both the terminal surface 320 and the lower end surface 330 to form two lines thereof along the longitudinal directions, respectively. The lines of the adhesive agent applied to the terminal surface 320 are long and the lines of the adhesive agent applied to the lower end surface 330 are short. In addition, the adhesive agent applied to the terminal surface 320 is applied to approximately symmetrically with respect to a line, and the adhesive agent applied to the lower end surface 330 is applied to approximately symmetrically about the approximately center point of the lower end surface 330.

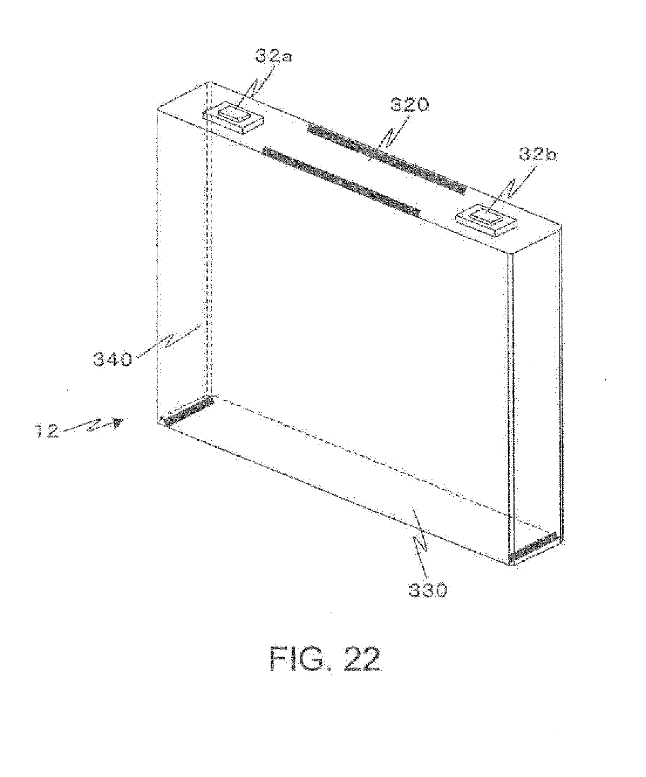

In addition, in Fig. 22, the adhesive agent is applied to the terminal surface 320 to form two lines thereof mainly in the longitudinal direction, and the adhesive agent is applied to the lower end surface 330 to form two lines thereof mainly in the width direction. The amount of the adhesive agent applied to the terminal surface 320 in the longitudinal direction is more, and the amount of the adhesive agent applied to the lower end surface 330 in the width direction is less.

### (Modifications of the first, second, third, fourth embodiments)

In the first, second, third, fourth embodiments, it has been described that the constituent components of the case 10 are respectively formed with synthetic resin each having insulation property, such as, polyphenylene ether (PPE), but metal may be used in place of this. In addition, metal to which corrosion resistant coating or insulation coating has been applied may be used.

In addition, it has been described that the circumference of the container main body is wound with an insulating film except at the upper end portion and the lower end portion of the container, but an insulating plate (sheet) may be sandwiched between the cells 12, in place of this insulating film. The place in which this insulating sheet is inserted may be arbitrarily selected, such that this insulating sheet is inserted between the battery cells in a series connected relationship and is not inserted between the battery cells in a parallel connected relationship. Since the battery cells in a parallel connected relationship have the same potential, the used amount of the insulating sheets can properly be reduced by inserting the insulating sheets like this.

It has been described that the lower case 16, the center case 14, the upper case 18 constructed as described above are screwed shut, but it is not necessarily to screw shut them. Because sufficient strength can be obtained in case that the lower case 16, the center case 14, the upper case 18, and the battery cells 12 are connected via the adhesive agent. It goes without saying that since screws are not used like this, the volumetric efficiency and productivity of the secondary battery apparatus as a whole increase.

In addition, in the present embodiments, a part of the battery cell 12 is inserted in the engagement groove 38, but battery cell 12 is not necessarily be inserted in the engagement groove 38, or it may be possible not to provide the engagement groove 38 itself. In addition, the number of the engagement grooves 38 and the number of the installed battery cells 12 are not necessarily equal. The number of the battery cells may be nine for the ten engagement grooves.

While certain embodiments have been described, those embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions. For example, the number of the cell units is not limited to 10, but may be increased or decreased, if need arises.

## Claims

1. A secondary battery apparatus, comprising:
a housing;
a plurality of battery cells housed in the housing; and
adhesive agent which adheres to the battery cells;
the battery cells each having an outer can whose main component is metal; and
the housing including resin as a main component of its constituent element.

2. The secondary battery apparatus according to Claim 1, wherein:
the housing further includes an inner surface facing the battery cells and engagement grooves formed on the inner surface to house the respective battery cells.

3. The secondary battery apparatus according to Claim 1, wherein:
a glass transition point of the adhesive agent is not more than -40 °C or not less than 80 °C;
a softening point of the adhesive agent is not more than -40 °C or not less than 80 °C; and
a tensile shear strength of the adhesive agent has a strength of not less than 1 N/mm².

4. The secondary battery apparatus according to Claim 1, wherein the adhesive agent fixes the battery cells and the adjacent battery cells separately at not less than two places, respectively.

5. The secondary battery apparatus according to Claim 1, wherein:
the housing includes an upper case to hold terminal surfaces of the battery cells and a lower case to support lower end portions of the battery cells; and
the adhesive agent connects each of the battery cells and the upper case at not less than one place, and connects each of the battery cells and the lower case at a place symmetrical to the one place across the center of the battery cell.

6. The secondary battery apparatus according to Claim 1, wherein:
the housing further includes an inner surface facing the battery cells and engagement grooves formed on the inner surface to house the respective battery cells; and
the adhesive agent fixes the engagement grooves, the battery cells and the other battery cells, respectively.

7. A secondary battery apparatus according to Claim 1, wherein said housing includes an upper case to hold a terminal surface of the battery cells and a lower case to support a lower end portion of the battery cells,
and said battery cells support the upper case via the adhesive agent.

8. The secondary battery apparatus according to Claim 7, wherein:
the adhesive agent is applied to the terminal surfaces of the battery cells and the lower end surfaces of the battery cells; and
the upper case is supported by the lower case via the adhesive agent applied to the lower end surfaces of the battery cells, the battery cells, and the adhesive agent applied to the terminal surfaces of the battery cells.

9. The secondary battery apparatus according to Claim 7, wherein:
the upper case includes a rib;
the adhesive agent is applied to circumference surfaces of the battery cells and the lower end surfaces of the battery cells; and
the upper case is supported by the lower case via the adhesive agent applied to the lower end surfaces of the battery cells, the battery cells, and the adhesive agent applied to the circumference surfaces of the battery cells.

10. The secondary battery apparatus according to Claim 7, wherein:
the adhesive agent is applied to the terminal surfaces of the battery cells, circumference surfaces of the battery cells and the lower end surfaces of the battery cells; and the upper case is supported by the lower case via the adhesive agent applied to the lower end surfaces of the battery cells, the battery cells, and the adhesive agent applied to the circumference surfaces of the battery cells, and is supported by the lower case via the adhesive agent applied to the lower end surfaces of the battery cells, the battery cells, and the adhesive agent applied to the terminal surfaces of the battery cells.

11. In a manufacturing method of a secondary battery apparatus comprising a housing, a plurality of battery cells housed in the housing, and adhesive agent which connects the battery cells and the housing, the housing further including an inner surface facing the battery cells and engagement grooves formed on the inner surface to house the respective battery cells, the manufacturing method of a secondary battery apparatus comprising:
inserting the battery cells into the engagement grooves, respectively; and
fixing the battery cells and the engagement grooves respectively using the adhesive agent.

12. The manufacturing method of a secondary battery apparatus according to Claim 11, wherein:
a glass transition point of the adhesive agent is not more than -40 °C or not less than 80 °C;
a softening point of the adhesive agent is not more than -40 °C or not less than 80 °C; and
a tensile shear strength of the adhesive agent has a strength of not less than 1 N/mm².

13. The manufacturing method of a secondary battery apparatus according to Claim 11, further comprising,
applying the adhesive agent to the battery cells at not less than two places to make heights of the terminal surfaces to be equal; and
inserting the battery cells into the housing.

14. The manufacturing method of a secondary battery apparatus according to Claim 11,
wherein said housing has a upper case to hold a terminal surface of the battery cell and a lower case to support a lower end portion of the battery cell,
wherein the manufacturing method further includes
inserting into the lower case;
applying the adhesive agent to the battery cells to make heights of the terminal surfaces to be equal; and
inserting the battery cells into a housing.

15. The manufacturing method of a secondary battery apparatus according to Claim 11,
wherein said housing has a upper case to hold a terminal surface of the battery cell and a lower case to support a lower end portion of the battery cell,
wherein the manufacturing method further includes
applying the adhesive agent to the upper case and/or the lower case to make heights of the terminal surfaces to be equal; and
inserting the battery cells into a housing.
